# Europäisches Patentamt
# European Patent Office
# Office européen des brevets

(19)

(11) Numéro de publication: **0 021 933**
**B1**

(12)

# FASCICULE DE BREVET EUROPEEN

(45) Date de publication du fascicule du brevet:
09.04.86

(51) Int. Cl.⁴: **B 64 D 11/06**, B 60 P 7/08

(21) Numéro de dépôt: 80400818.3

(22) Date de dépôt: 06.06.80

(54) Dispositif de variation du pas des sièges dans les avions commerciaux.

(30) Priorité: 06.06.79 FR 7914485

(43) Date de publication de la demande:
07.01.81 Bulletin 81/1

(45) Mention de la délivrance du brevet:
09.04.86 Bulletin 86/15

(84) Etats contractants désignés:
BE CH DE GB IT LI NL SE

(56) Documents cités:
FR - A - 2 359 026
US - A - 3 189 313
US - A - 3 986 459
US - A - 4 109 891

(73) Titulaire: TISSMETAL LIONEL-DUPONT, 138 boulevard de la Croix-Rousse, F-69001 Lyon (FR)

(72) Inventeur: Martin, Gérard, 19, Allée des Charmes, F-91310 Longpont-sur-Orge (FR)

(74) Mandataire: Bruder, Michel, Cabinet Michel Bruder 10, rue de la Pépinière, F-75008 Paris (FR)

LIBER, STOCKHOLM 1986

## Description

La présente invention concerne un dispositif de variation du pas des sièges dans les avions commerciaux.

Les avions commerciaux sont équipés, au plancher de leur cabine, de rails longitudinaux pour la fixation des sièges passagers. Le principe des attaches permet de choisir, pour chaque siège individuellement, une position déterminée et, en fonction de l'espace disponible et du nombre de sièges.

L'intervalle ou le "pas élémentaire" entre chaque position possible étant universellement normalisé à 25,4 mm, le "pas" des sièges qui en résulte est nécessairement un nombre entier de "pas élémentaires".

S'ils permettent un choix de positions, les rails et les attaches de sièges connus à ce jour ne sont toutefois pas conçus pour permettre un déplacement aisé et continu des sièges dans le sens longitudinal. Tout au plus peut-on ajuster localement de quelques centimètres leur position. Il est exclu de pouvoir modifier la position de tous les sièges d'une cabine sans les dégager des rails un par un, les transporter manuellement et les refixer à leur nouvelle position.

Ce manque de souplesse provient de plusieurs raisons, à savoir:

1. chaque siège prend appui sur deux rails;

2. les attaches des sièges ne sont pas conçues pour glisser facilement dans les rails et ces derniers eux-mêmes sont souvent encombrés de débris divers qui s'opposent au glissement;

3. lorsque l'on veut déplacer un siège, on ne peut le faire qu'en lui appliquant des forces au-dessus du niveau des rails.

Ce travail étant manuel, il est impossible d'équilibrer les efforts sur chaque pied de manière à les déplacer simultanément. Il en résulte inévitablement un coincement dans les rails et l'arrêt du mouvement. Plus particulièrement les rails longitudinaux sur lesquels sont fixés les sièges présentent chacun une gorge longitudinale en forme de queue d'aronde. A intejvalles très réguliers sont percés, dans les lèvres intérieures du rail, des trous verticaux. Par ailleurs, les pieds des sièges comportent à l'avant et à l'arrière des tétons de forme conique à la base, tétons qui peuvent pénétrer dans le rail longitudinal par l'un des trous prévus à cet effet dans les lèvres en regard et qui peuvent ensuite s'y accrocher après un déplacement égal à un demi-pas élémentaire. A l'arrière le pied du siège comporte un verrou vertical qu'on introduit dans un des trous du rails après déplacement du pied d'un demi-pas élémentaire.

Avec un tel dispositif d'attache, il faut, lorsque l'on veut fixer un siège au rail opérer de la façon suivante sur chacun des deux pieds:

1. placer le verrou en position haute au moyen de sa came;

2. Introduire tous les tétons (6 au total) simultanément à l'emplacement désiré dans les trous du rail;

3. déplacer le siège entier d'un demi-pas élémentaire vers l'avant ou vers l'arrière, de manière à localiser le verrou dans l'axe du trou désiré;

4. tourner la came de manière à faire descendre le verrou dans le trou correspondant.

Pour démonter un siège on répète ces opérations en sens inverse.

Lorsqu'il s'agit de déplacer un siège de quelques pas élémentaires, ce dispositif connu ne permet pas aisément cette opération car les efforts exercés sur le siège s'ajoutant aux déformations inévitables de la structure de l'ensemble du siège sont la cause très fréquente du dégagement hors du rail d'un ou plusieurs tétons qui, au passage dans l'axe d'un trou, ont tendance à se soulever hors du rail.

La présente invention a principalement pour but de remédier aux inconvénients précités des dispositifs de montage connus grâce à la prévision d'un dispositif motorisé, électro-mécanique, adaptable aux structures d'avions et de sièges les plus courants permettant un déplacement contrôlé des sièges et notamment le changement de leur pas dans une zone déterminée, en vue de changer la configuration de l'ensemble de cette zone et sa classification commerciale. Par rapport au document US—A—3986459 qui décrit déjà un dispositif de variation du pas des sièges dans les avions commerciaux, comportant des rails longitudinaux comprenant, dans leurs ailes horizontales supérieures, des gorges en queue d'aronde et des trous percés dans les deux lèvres intérieures du rail délimitant cette gorge, la distance entre deux trous voisins étant égale à celle d'un pas élémentaire de déplacement du siège, et sur chaque pied d'un siège, un dispositif d'arrimage du siège au rail dans la position voulue, l'un des pieds comportant un verrou mobile verticalement et pouvant s'engager dans un trou du rail, l'invention est caractérisé en ce que le dispositif comprend un siège moteur, des sièges mobiles disposés en avant et/ou en arrière du siège moteur, et un mécanisme de transmission entre le siège moteur et les sièges mobiles, en ce que le siège moteur porte un mécanisme d'entraînement pouvant être mû par un moteur, ce mécanisme d'entraînement étant accouplé à des organes de liaison allongés mobiles en translation, situés sur chaque rail et pouvant être déplacés vers l'avant ou vers l'arrière d'une distance prédéterminée en fonction du changement de pas désiré, en ce que le mécanisme de transmission comprend un jeu de lattes métalliques reliant, au niveau des rails, les pieds des sièges mobiles entre eux, les lattes les plus proches du siège moteur étant accouplées aux organes de liaison allongés, et en ce que des moyens sont associés aux pieds des sièges mobiles, pour commander automatiquement le déverrouillage du siège dès que les lattes sont déplacées.

Le siège moteur peut porter à demeure un moteur de tout type approprié et son tableau de commande, ce moteur étant accouplé au mécanisme d'entraînement. Le moteur et son tableau de commande peuvent être connectés en permanence au système électrique de l'avion et alimentés seulement à l'arrêt au sol.

Le mécanisme d'entraînement porté par le siège moteur peut être aussi actionné par un moteur indépendant, manoeuvré à la main et connecté mécaniquement à ce mécanisme d'entraînement.

Les organes de liaison allongés sont avantageusement constitués par deux tringles, à raison d'une sur chaque rail actionnant directement, en compression ou en traction, les lattes métalliques constituant le mécanisme de transmission. Ces lattes réunissent, au niveau des rails, les pieds avant de chaque siège aux pieds arrière du siège précédent. Les lattes des sièges les plus voisins du siège moteur sont directement reliées aux tringles motrices.

Lorsqu'une paire de lattes est mise en mouvement, les pieds arrière du siège concerné sont tout d'abord déverrouillés automatiquement et le siège est alors libre de se déplacer. Suivant le cas le siège moteur peut être placé devant ou derrière le siège à déplacer. Ce siège moteur peut également se déplacer lui-même. Pour des déplacements de 14 p (p étant le pas élémentaire choisi égal à 25,4 mm) maximaux du siège voisin, la manoeuvre directe est complètement automatique suivant le programme établi. Le retour à la version d'origine est également automatique.

La seule intervention manuelle exigée consiste à verrouiller les sièges dans leur nouvelle position dès que le mouvement des sièges a cessé. Quoique la mise en mouvement des sièges se fasse nécessairement en partant du siège moteur, l'arrêt est simultané pour tous les sièges dès que la nouvelle configuration est obtenue.

En principe, un jeu de lattes permet le choix entre deux configurations à savoir un grand "pas" et un petit "pas". A part le jeu de lattes qui constitue aussi le programme, tous les éléments du système sont normalisés quels que soient le "pas" et le type de sièges utilisés.

Pour des déplacements dépassant 14 p il faut commander une série de manoeuvres qui impliquent le déplacement du siège moteur lui-même. Par exemple un siège moteur situé au neuvième rang d'une série de 16 sièges se trouvant à une distance de 34 p l'un de l'autre peut déplacer tous les sièges de 1 à 8 vers l'avant et de 9 à 16 vers l'arrière, en réduisant le "pas" entre sièges de 34 p à 32 p, de manière à dégager entre les rangs 8 et 9 un espace de 32 p suffisant pour un siège supplémentaire.

Tous les sièges susceptibles d'être déplacés sont équipés, aux pieds arrière, d'un dispositif de déverrouillage automatique et de verrouillage manuel, qui garantit une sécurité totale et une fiabilité maximale. Pendant son déplacement le siège ne peut se libérer des rails en aucun point.

On décrira ci-après, à titre d'exemple non limitatif, une forme d'exécution de la présente invention en référence au dessin annexé sur lequel:

La figure 1 est une vue en élévation des éléments constitutifs principaux du dispositif de variation de "pas" suivant l'invention, dispositif placé entre un siège moteur dont le pied avant est représenté partiellement et un siège mobile dont le pied arrière est représenté partiellement, le pied arrière du siège mobile étant représenté dans deux positions correspondant à deux "pas" entre sièges différents.

La figure 2 est une vue en plan, partiellement en coupe horizontale, du dispositif illustré sur la figure 1.

La figure 3 est une vue en élévation et en coupe verticale partielle du dispositif d'arrimage associé au pied arrière d'un siège mobile.

La figure 4 est une vue en coupe verticale et transversale faite suivant la ligne IV—IV de la figure 3.

La figure 5 est une vue en coupe verticale et transversale faite suivant la ligne V—V de la figure 3.

La figure 6 est une vue en plan partielle d'une latte de transmission.

La figure 7 est une vue en coupe verticale et transversale faite suivant la ligne VII—VII de la figure 6.

La figure 8 est une vue en perspective éclatée d'un dispositif d'arrimage d'un pied arrière et de la latte de transmission qui lui est associée.

La figure 9 est une vue en élévation schématique, à plus grande échelle, d'une forme d'excécution d'un mécanisme maintenant le verrou en position haute.

La figure 10 est une vue en élévation de l'ensemble des éléments du dispositif de variation de "pas" qui sont associés à un siège situé en avant du siège moteur.

La figure 11 est une vue en plan des éléments représentés sur la figure 10.

La figure 12 est une vue en élévation d'une latte de transmission faisant partie du dispositif représente sur les figures 10 et 11.

La figure 13 est une vue en plan de la latte représentée sur la figure 12.

La figure 14 est une vue en élévation de l'ensemble des éléments constitutifs du dispositif de variation de "pas" qui sont associés à un siège situé en arrière du siège moteur.

La figure 15 est une vue en plan des éléments constitutifs représenté sur la figure 14.

La figure 16 est une vue en élévation d'une latte de transmission associée au dispositif représenté sur les figures 14 et 15.

La figure 17 est une vue en plan de la latte de transmission représentée sur la figure 16.

La figure 18 est une vue en coupe transversale partielle de la partie inférieure du siège moteur.

La figure 19 est une vue en perspective d'une variante d'exécution du dispositif maintenant le verrou en position haute.

Le dispositif suivant l'invention qui est destiné à permettre de faire varier le "pas" des sièges dans un avion commercial, est représenté schématiquement sur les figures 1 et 2. Il est utilisé pour faire varier le "pas" entre un siège "moteur" représenté uniquement et partiellement par son pied avant 1 et un autre siège situé en avant du siège moteur et représenté partiellement et uniquement par son pied arrière 2. Le siège moteur est fixe tandis que le siège situé en avant est mobile. Le siège moteur 1, les sièges mobiles, tels que le siège 2, situés en avant du siège moteur 1 et les autres sièges mobiles, non représentés, situés en arrière du siège moteur 1 sont tous fixés à des rails longitudinaux 3.

Chaque rail 3, d'un type couramment utilisé à bord des avions de transport modernes, a une section droite en forme de I et il présente, dans son aile supérieure, une gorge longitudinale 4 à section droite en forme de queue d'aronde. A intervalles très réguliers des trous verticaux 5, de 20 mm environ de diamètre, sont percés dans les lèvres intérieures 3a du rail qui se font face et délimitent la gorge 4. Le profil interne du rail 3, le diamètre des trous et l'intervalle qui les sépare sont normalisés pour les avions commerciaux des pays occidentaux. Le "pas" des trous p est égal à 25,4 mm.

L'arrimage des pieds des sièges, qu'il s'agisse des pieds avant ou arrière, est réalisé au moyen de deux crochets 6, à section droite en forme de L. Chacun des crochets 6 comporte une aile horizontale inférieure, de petite largeur, destinée à s'engager dans la gorge 4, et une aile verticale de grande hauteur. Les crochets 6 sont introduits individuellement dans la gorge 4 du rail 3, en n'importe quel point sans tenir compte des trous. On fait ensuite glisser ces deux pièces 6 dos à dos, comme il apparaît plus clairement sur la figure 4. Les deux crochets 6 sont ensuite assemblés à leurs sommets au moyen d'un axe horizontal et transversal 8 qui assure directement la liaison avec le pied 2 du siège (figures 3 et 4). Ce dispositif d'arrimage est utilisé à l'avant et à l'arrière de chaque pied. La longueur A des ailes inférieures horizontales formant cornières est supérieure au "pas" p des trous 5 du rail 3 de manière à assurer un accrochage positif sur deux lèvres successives du rail (figure 6) lorsque le siège est maintenu verrouillé au moyen d'un verrou vertical 9 en position basse. Lorsque le verrou 9 est en position haute et que le siège est déplacé vers l'avant ou vers l'arrière, les crochets 6 glissent dans le rail 3 mais ne peuvent s'en dégager en aucun point, l'ensemble qu'ils forment dos à dos s'y opposant totalement. On peut ainsi déplacer longitudinalement les sièges en éliminant complètement les risques de désengagement.

Le dispositif d'arrimage d'un siège qui vient d'être décrit offre également une grande sécurité d'arrimage en cas d'accident puisque même si le verrou 9 se rompt, le pied du siège ne peut jamais se dégager du rail ni à l'avant ni à l'arrière.

Le dispositif suivant l'invention est conçu pour effectuer automatiquement et dans l'ordre les opérations qui s'imposent lorsque l'on veut modifier le "pas", c'est-à-dire la distance entre sièges, dans un groupe de sièges. Ces opérations successives sont les suivantes:

a. déverrouller les sièges individuellement;

b. pour chaque siège individuellement appliquer une force motrice vers l'avant ou vers l'arrière, au niveau le plus bas possible et simultanément sur les deux pieds, de manière à éviter les coincements;

c. arrêter le mouvement lorsque chaque siège se trouve à la nouvelle position voulue;

d. verrouiller les sièges dans leur nouvelle position: cette dernière opération n'est pas prévue automatique mais manuelle de manière à assurer simultanément le contrôle du verrouillage, point essentiel pour la sécurité des passagers.

L'élément essentiel du dispositif suivant l'invention, permettant d'effectuer dans l'ordre les opérations ci-dessus, est constitué par un jeu de lattes de transmission 11 montées à coulissement longitudinal sur les rails 3. Chacune de ces lattes 11 présente une section droite en forme de U inversé par laquelle elle coulisse sur l'aile supérieure du rail 3. Cette latte 11 porte, le long de ses deux bords longitudinaux, deux cames parallèles 12 entre lesquelles est situé le verrou 9 à mouvement vertical. Cette latte 11 est percée, dans sa partie médiane, d'une boutonnière longitudinale 13 qui lui permet un mouvement de 2 p (50,8 mm) vers l'avant ou vers l'arrière, en glissant entre le rail 3 et le dispositif d'arrimage 6,8 du pied du siège, et ce quelle qui soit la position verticale du verrou 9. En fin de course vers l'avant, l'extrémité postérieure de la boutonnière 13 vient en butée contre les crochets 6. En fin de course vers l'arrière ce sont des ergots 14 prévus latéralement sur la latte 11 qui viennent en butée contre un corps 15 du dispositif d'arrimage.

Le mouvement relatif de la latte 11 par rapport au pied arrière 2 du siège est donc toujours de 2 p (50,8 mm) quelle que soit l'installation. Cette course est nécessaire pour effectuer le déverrouillage automatique du siège, préalablement à tout déplacement.

La course totale de 2 p pour la latte de transmission. 11 et les cames 12 a été choisie en tenant compte des critères suivants:

1. d'une part les variations de "pas" entre les sièges étant exprimées nécessairement en un nombre entier de "pas élémentaires" (p=25,4 mm), la course totale nécessaire au déverrouillage doit être également mesurée par un nombre entier de "pas élémentaires" p pour pouvoir être prise en compte dans le programme des variations du "pas" entre sièges.

2. d'autre part cette course fixant la variation minimale du pas entre sièges, il faut choisir le nombre entier le plus petit possible pour couvrir les plus petits changements de "pas" demandés. Une course d'un "pas", aurait été théoriquement la mesure idéale pour obtenir la flexibilité maximale du programme. Toutefois ceci aurait conduit à une pente des cames 12 exigeant des lattes 11 des efforts de déverrouillage beaucoup plus importants.

Un course de 2 p correspond à un dessin correct des cames 12 et elle constitue un minimum très acceptable pour les changements de "pas" les plus demandés. Enfin une course de 3 p aurait conduit à un dispositif d'arrimage plus long et plus lourd et aurait constitué un minimum trop élevé pour la majorité des variations de "pas" demandés.

En conclusion la course de 2 p pour la déverrouillage constitue bien un optimum.

On décrira maintenant le mécanisme de verrouillage proprement dit. Ce mécanisme comporte le verrou 9 à mouvement vertical et dont est solidaire un axe transversal et horizontal 16. Cet axe coulisse dans deux fentes verticales 17 pratiquées dans le corps 15 du dispositif d'arrimage. A ses extrémités l'axe 16 porte deux galets 18 montés librement sur cet axe. Lex cames latérales 12 de la latte de transmission 11 agissent respectivement sur les deux galets 18, de manière à repousser ces galets et par conséquent le verrou 9 vers le haut, pendant la course de déverrouillage. Après une course égale à un "pas élémentaire" p (25,4 mm) soit exactement au milieu de la course, les cames 12 ont provoqué le dégagement total du verrou 9 hors du rail 3 et elles ont assuré de ce fait la libération du pied arrière du siège.

Dans la seconde moitié de leur course, les cames 12 dégagent l'espace situé en-dessous des galets 18, ce qui permettrait au verrou 9, sollicité vers le bas par un ressort 19, de redescentre immédiatement dans sa position initiale si un système particulier ne le maintenait dans sa position haute, déverrouillé. Ce système reste bloqué pendant le déplacement du siège qui suit immédiatement l'arrivée à fond de course de la latte de transmission 11. A ce moment, en effet, le siège étant libéré se trouve être entraîné par la latte 11, vers l'avant ou vers l'arrière. Lorsque le siège occupe sa nouvelle position, le système de maintien du verrou 9 est débloqué manuellement, ce qui a pour effet de verrouiller chaque pied de siège individuellement.

La figure 9 représente une forme d'exécution non limitative d'un mécanisme permettant de maintenir le verrou 9 en position haute. Le verrou 9, lorsqu'il est dégagé du rail 3 sous l'action des cames 12, dans un mouvement vertical ascendant, entraîne en rotation une came de blocage 21 constituée par un cylindre 22 d'axe horizontal et transversal et par un ergot 23 excentré par rapport à cet axe. Cet ergot 23 s'engage dans une encoche 9a prévue dans une tige 9b prolongeant le verrou proprement dit 9 vers le haut (figure 8). Lorsque le verrou 9 est arrivé en haut de sa course, en étant repoussé par les cames 12, et ce à l'encontre de l'action du ressort de compression 19, il reste maintenu dans cette position haute par l'ergot 23. Pour que la fonction requise soit correctement remplie par la came 21, il faut réunir plusieurs conditions. En effet la cinématique de la came 21, sa position par rapport à l'axe du verrou 9 et le coefficient de frottement interne des pièces en contact doivent être tels que:

1. le déplacement vers le haut du verrou 9, lorsqu'il est sollicité par les cames 12, ne soit pas bloqué par la came 21;
2. le déplacement vers le bas du verrou 9, lorsqu'il est dans la position haute où il se trouve sollicité par le ressort 19, soit effectivement bloqué par la came 21.

Si cette dernière condition est remplie, le déblocage ne peut se faire que manuellement et dans cette forme d'exécution la manoeuvre est identique à celle des cames conventionnelles et peut se faire à l'aide d'un tournevis ou d'une pièce de monnaie s'engageant dans une fente 20 prévue dans la face frontale externe de la came 21.

Ce montage permet également de déverrouiller manuellement les sièges qui, n'étant pas destinés à être déverrouillés automatiquement, ne sont pas montés sur des cames 12. Tel est notamment le cas du siège moteur dont le pied arrière, non représenté sur la figure 1, comporte un dispositif à came 21 pour assurer son déverrouillage.

En résumé les cames 12 et 21 ont sur le verrou 9 des possibilités d'action différentes mais qui ne peuvent se contrarier, à savoir:

Les cames 12 entraînent le déverrouillage automatique auquel la came 21 ne peut pas s'opposer;

La came 21 permet à tout moment le déverrouillage manuel et elle permet aussi le verrouillage manuel lorsque le siège est à l'arrêt, après un déplacement automatique.

Le dispositif de la came 21, s'il ressemble à un dispositif connu, en diffère en plusieurs points qui apparaissent à l'examen de la figure 9. On constate en effet que:

a. L'axe horizontal du cylindre 22 est décentré d'une distance a (par exemple de 1,7 mm) par rapport à l'axe vertical du verrou 9;

b. Dans la position basse du verrou 9 c'est-à-dire lorsque ce dernier est engagé dans le rail 3, l'ergot 23 occupe une position nettement décalée par rapport à l'axe de la came 21. Il en résulte que tout déplacement vers le haut du verrou 9 entraîne nécessairement la rotation du cylindre 22.

c. En position haute, sous l'action du ressort 19, le verrou 9 a tendance à redescentre. Toutefois ce mouvement est retenu par l'ergot 23, la poussée du ressort 19 et combinaison avec les frottements entre les différentes pièces donnant naissance à un couple qui s'oppose à la rotation du cylindre 22.

d. Enfin, l'ergot 23 a une coúrse angulaire inférieure de l'ordre de 105 degrés, comparativement à l'ergot d'un dispositif connu qui parcourt 180 degrés sous une action manuelle.

On décrira maintenant, en se référant plus particulièrement aux figures 1, 2 et 9, la façon dont peut être réalisée la connexion entre le siège moteur et le siège mobile situé immédiatement en avant.

Le pied arrière 2 du siège mobile est représenté dans les deux positions possibles c'est-à-dire la plus avancée (en traits pleins) et la position la plus reculée (en traits interrompus). Il n'existe pas de position intermédiaire. Dans la position avancée le verrou 9 est engagé dans le rail 3, ce qui, extérieurement, est indiqué par la position de l'index de la came de verrouillage 21 en regard du repère 1. La latte de transmission 11 et les cames 12 se trouvent également en position avancée.

Pour déplacer le siège mobile 2 vers l'arrière, on met en mouvement la latte 11 par l'intermédiaire d'une crémaillère 24 associée au système moteur et avec laquelle elle est directement accouplée.

Après un déplacement d'un "pas élémentaire" p vers l'arrière les cames 12 ont amené le verrou 9 en position haute et le siège 2 se trouve alors libre de se déplacer. Toutefois le siège ne se met en mouvement vers l'arrière que lorsque la latte de transmission 11 a parcouru une distance égale à 2 p, c'est-à-dire au moment où les ergots 14 viennent en butée contre le corps 15 du dispositif d'arrimage. A cet instant le siège est directement tiré vers l'arrière par la latte 11 jusqu'à la position programmée, qui est indiquée en traits interrompus sur la figure 1. Dans cette position le verrou 9 se trouve dans la position haute déverrouillée qui suit le mouvement. Dans cette position la came 21 est en position de déverrouillage ce qui se traduit par l'index de cette came en regard du repère A2. Une action manuelle est alors nécessaire pour ramener l'index de la came 21 en face du repère A1 indiquant un verrouillage positif.

Dans le cas illustré sur la figure 1, on a montré à titre d'exemple un déplacement du siège de 8 p vers l'arrière, qui demande en fait un déplacement de 10 p de la crémaillère 24 et de la latte 11, la distance de 2 p étant utilisée pour le déverrouillage du siège.

Pour ramener le siège en position avancée, la manoeuvre est exactement inverse. La crémaillère 24 est propulsée vers l'avant et communique son mouvement d'avancement à la latte 11 et aux cames 12. Après une course p, le verrou 9 est dégagé du rail et après une course de 2 p, la crémaillère 24 vient en butée avec le corps 15 du dispositif du pied arrière 2 qui communique la poussée nécessaire vers l'avant jusqu'à la position désirée.

La figure 10 montre l'installation complète d'un siège situé en avant du siège moteur. On peut voir qu'un tel siège est posé sur deux lattes 11 établissant une liaison de longueur variable entre d'une part le pied avant 2A du siège mobile et le pied arrière du siège précédent, et d'autre part le pied arrière 2 de ce siège mobile et le pied avant du siège suivant. L'interaction d'un siège à l'autre est totalement contrôée par le dessin des lattes de connexion 11. Une latte 11 type est représentée sur les figures 12 et 13. Elle comporte, à l'avant, une boutonnière 13 de dimensions constantes pour toutes les lattes, enveloppant le verrou 9 et les crochets 6 d'un pied arrière 2. A l'avant la latte 11 comporte également les cames 12 commandant le déverrouillage du pied arrière 2, et aussi les ergots 14. A l'arrière la latte 11 présente une autre boutonnière 13a enveloppant les crochets 6 du pied avant 2A. La longueur de cette boutonnière 13a est égale à A+(ΔP−2), ΔP étant défini plus loin.

Le montage est un peu différent pour les sièges situés en arrière du siège moteur, quoique le principe reste identique. Un tel montage est représenté sur les figures 14 et 15. On constate que dans ce cas la latte 11A s'étend du pied arrière d'un siège au pied arrière d'un siège suivant. Cette latte 11A porte les cames 12 à l'arrière et non plus à l'avant. Par ailleurs elle ne comporte plus les ergots 14. Cette disposition provient de ce que la force motrice à l'origine des déplacements successifs vient de l'avant et non plus de l'arrière. La latte 11A de transmission de cette force motrice doit donc nécessairement passer librement sous le pied avant d'un siège pour déverrouiller le pied arrière préalablement à la mise en mouvement de ce siège. A cet effet la latte est réalisée de la façon représentée sur les figures 16 et 17. On remarque que la latte 11A comporte, à l'avant, une boutonnière 13A de longueur A correspondant à la longueur des crochets 6. Cette boutonnière 13A établit une connexion rigide et permanente avec les crochets 6 du siège précédent.

Au milieu la latte 11A comporte une autre boutonnière 13B de longueur égale à A+ΔP (ΔP est la différence entre le plus grand "pas" des sièges et le plus petit "pas" en avant du siège considéré). La dimension ΔP ne peut être inférieure à 2p pour permettre le déverrouillage du siège. Enfin, à l'arrière la latte 11A comporte les cames 12 ainsi qu'une ouverture 13C dégageant le verrou 9 du siège.

On décrira maintenant, en se référant plus particulièrement aux figures 1 et 18, une forme d'exécution du mécanisme motirisé associé au siège moteur pour provoquer la variation du "pas" des sièges. Par siège moteur on entend un siège équipé, sur chaque rail 3, d'un réducteur de vitesse à engrenage 31 communiquant un mouvement vers l'avant ou l'arrière à une crémaillère 24 située dans l'axe du rail, très près du niveau de la surface supérieure de celui-ci. Cette disposition particulière des crémaillères 24 permet d'exercer les forces linéaires nécessaires, vers l'avant ou l'arrière, sur les sièges les plus voisins, en avant ou en arrière du siège moteur, sans introduire de couple parasite. Le mouvement des deux crémaillères 24, situées le long des deux rails longitudinaux 3, s'effectue de façon parfaitement synchronisée en vue d'éviter tout coincement des sièges mobiles dans les rails. La distance entre le réducteur de vitesse 31 et le pied arrière du siège moteur limite pratiquement la longueur de la crémaillère et sa course utile à environ 16 p. Il en résulte que, compte tenu du déverrouillage du premier siège qui demande une course de 2 p, un siège moteur peut actionner un maximum d'environ 7 sièges mobiles en succession automatique, en supposant que la variation de "pas" entre chaque siège ne dépasse pas 2 p. La synchronisation entre les crémaillères est obtenue par l'emploi d'un moteur qui actionne simultanément les deux réducteurs de vitesse.

Dans la forme d'exécution représentée sur la figure 18 le moteur 32 est du type électrique et il est fixé à la structure du siège entre les deux pieds avant, de préférence vers le milieu. Il actionne les deux réducteurs de vitesse 31 disposés latéralement au moyen de deux tubes ou câbles de torsion 33 qui attaquent directement une vis sans fin. La première roue dentée dans chaque réducteur 31 est montée librement sur son axe et elle transmet son couple au moyen d'un dispositif limiteur de couple d'une manière connue en soi. Un second étage, comportant une vis sans fin et une roue dentée, entraîne une troisième roue dentée 34 qui actionne directement la crémaillère 24. Les mouvement vers l'avant ou vers l'arrière sont obtenus par inversion du sens de rotation du moteur.

Suivant une autre forme d'exécution le moteur n'est pas fixé entre les pieds du siège mais il est utilisé manuellement comme outil portatif. Dans ce cas les deux réducteurs sont directement connectés entre eux par un seul câble de torsion 33. Le moteur portatif est connecté à un axe de sortie latéral de la première vis sans fin de l'un ou l'autre réducteur et le fonctionnement est identique.

Naturellement on pourrait utiliser, à la place d'un moteur électrique, un moteur pneumatique ou de tout autre type, la manoeuvre étant identique pour déplacer les sièges.

Comme on peut le voir sur les figures 1, 2 et 18 c'est le réducteur de vitesse 31 qui, sur chaque rail 3, établit la liaison structurale entre le pied 1 et le rail 3. Cette disposition est la seule qui permette à la crémaillère 24 de se situer exactement dans l'axe du rail le plus près possible de sa surface supérieure. Le pied 1 est fixé au réducteur de vitesse 31 par un ou deux boulons.

Le réducteur 31 est fixé au rail par deux crochets 35 montés dos à dos d'une manière similaire aux crochets 6. Leur forme est toutefois différente au-dessus du niveau du rail. Alors que les crochets 6 sont droits, les crochets 35 dégagent l'espace immédiatement au-dessus de manière à laisser passer librement la crémaillère 24. Les crochets 35 forment un Z qui enveloppe le réducteur à sa base et s'y fixe par une rangée de vis 36.

La figure 19 illustre une variante d'exécution des moyens permettant de maintenir le verrou 9 en position haute. Dans cette variante le verrou 9 est maintenu dans cette position non plus par la came 21 mais par un ressort 37 qui s'engage dans une fente de l'axe 9b du verrou 9 lorsque ce dernier est en position haute. Le ressort 37 est fixé au corps 15 du dispositif d'arrimage.

Pour verrouiller le siège après un déplacement automatique, il suffit de dégager le ressort 37 et de laisser retomber le verrou 9 sous l'action du ressort de rappel 19. Ce dispositif de maintien du verrou est plus simple à construire que celui illustré sur les figures 8 et 9.

## Revendications

1. Dispositif de variation du pas des sièges dans les avions commerciaux, comportant des rails longitudinaux (3) comprenant, dans leurs ailes horizontales supérieures, des gorges en queue d'aronde (4) et des trous (5) percés dans les deux lèvres intérieures (3a) du rail délimitant cette gorge, la distance entre deux trous voisins étant égale à celle d'un pas élémentaire de déplacement du siège, et, sur chaque pied d'un siège, un dispositif d'arrimage du siège au rail dans la position voulue, l'un des pieds comportant un verrou (9) mobile verticalement et pouvant s'engager dans un trou du rail, caractérisé en ce qu'il comprend un siège moteur (1), des sièges mobiles (2) disposés en avant et/ou en arrière du siège moteur, et un mécanisme de transmission entre le siège moteur et les sièges mobiles, en ce que le siège moteur porte un mécanisme d'entraînement (33, 31, 34), pouvant être mû par un moteur (32), ce mécanisme d'entraînement étant accouplé à des organes de liaison allongés (24) mobiles en translation, situés sur chaque rail (3) et pouvant être déplacés vers l'avant ou vers l'arrière d'une distance prédéterminée en fonction du changement de pas désiré, en ce que le mécanisme de transmission comprend un jeu de lattes métalliques (11, 11A) reliant, au niveau des rails, les pieds des sièges entre eux, les lattes (11) les plus proches du siège moteur étant accouplées aux organes de liaison allongés (24), et en ce que des moyens sont associés aux pieds de chaque siège mobile pour commander automatiquement le déverrouillage du siège dès que les lattes (11) sont déplacées.

2. Dispositif suivant la revendication 1, caractérisé en ce que le siège moteur porte à demeure un moteur (32) accouplé au mécanisme d'entraînement (33, 31, 34).

3. Dispositif suivant la revendication 1, caractérisé en ce que le mécanisme d'entraînement porté par le siège moteur est actionné par un moteur indépendant, manoeuvré à la main et connecté mécaniquement à ce mécanisme d'entraînement.

4. Dispositif suivant l'une quelconque des revendications 1 à 3, caractérisé en ce que les organes de liaison allongés (24) sont constitués par deux crémaillères, à raison d'une sur chaque rail, actionnant directement, en compression ou en traction, les lattes métalliques (11) constituant le mécanisme de transmission, ces lattes réunissant, au niveau des rails, les pieds avant de chaque siège aux pieds arrière du siège précédent et les lattes (11) des sièges les plus voisins du siège moteur étant directement reliées aux tringles motrices.

5. Dispositif suivant l'une quelconque des revendications 1 à 4, caractérisé en ce que chaque latte de transmission (11) présente une section droite en forme de U inversé par laquelle elle coulisse sur l'aile supérieure du rail (3) et elle porte sur sa face supérieure, le long de ses deux bords longitudinaux, deux cames parallèles (12) en regard, entre lesquelles est situé le verrou (9) à mouvement vertical, cette latte étant percée, dans sa partie médiane, d'une boutonnière longitudinale (13) lui permettant un mouvement de deux pas élémentaires (2 p) vers l'avant ou vers l'arrière, en glissant entre le rail (3) et le dispositif d'arrimage (6, 8) du pied du siège et ce, quelle qui soit la position verticale du verrou (9), la fin de course vers l'avant étant déterminée par la venue en butée de l'extrémité postérieure de la boutonnière (13) contre les crochets (6) du dispositif d'arrimage, tandis que la fin de course vers l'arrière est déterminée par des ergots (14) prévus latéralement sur la latte (11) et venant en butée contre un corps (15) du dispositif d'arrimage.

6. Dispositif suivant la revendication 5, caractérisé en ce que le varrou (9) à mouvement vertical est solidaire d'un axe transversal et horizontal (16) coulissant dans des fentes verticales (17) pratiquées dans le corps (15) du dispositif d'arrimage et portant à ses extrémités des galets (18) sur lesquels agissent les cames latérales (12) de la latte de transmission (11), ce verrou (9) étant sollicité en permanence vers le bas par un ressort (19).

7. Dispositif suivant la revendication 6, caractérisé en ce que le verrou (9) est solidaire d'une tige (9b) le prolongeant vers le haut et dans laquelle est ménagée une encoche (9a) et en ce qu'une came de blocage (21) comprend un cylindre (22) d'axe horizontal et transversal décalé par rapport à l'axe vertical du verrou (9) et un ergot (23) excentré par rapport à cet axe et s'engageant dans l'encoche (9a) de la tige du verrou (9), cette came (21) présentant, dans sa face frontale externe, une fente (20) permettant de la faire tourner.

8. Dispositif suivant la revendication 6, caractérisé en ce que le verrou (9) est maintenu en position haute par un ressort (19) s'engageant dans une fente de la tige (9b) du verrou (9) lorsque ce dernier est en position haute, ce ressort (19) étant fixé au corps (15) du dispositif d'arrimage.

9. Dispositif suivant l'une quelconque des revendications 1 à 8, caractérisé en ce qu'un siège mobile situé en avant du siège moteur est posé sur deux lattes (11) établissant une liaison de longueur variable entre, d'une part, le pied avant (2A) du siège mobile et le pied arrière du siège précédent et, d'autre part, le pied arrière (2) de ce siège mobile et le pied avant du siège suivant, chaque latte (11) comportant, à l'avant, une boutonnière (13) de dimension constante pour toutes les lattes, enveloppant le verrou (9) et les crochets (6) d'un pied arrière (2), des cames (12) commandant le déverrouillage du pied arrière (2) et, à l'arrière, une autre boutonnière longitudinale (13a) enveloppant les crochets (6) du pied avant (2A) et de longueur égale à A+(ΔP−2), A étant la longueur des crochets (6) et ΔP étant la différence entre le plus grand pas du siège et le plus petit pas en avant du siège considéré.

10. Dispositif suivant l'une quelconque des revendications 1 à 8, caractérisé en ce que pour les sièges mobiles situés en arrière du siège moteur la liaison est assurée entre eux par des lattes (11A) s'étendant du pied arrière d'un siège au pied arrière d'un siège suivant, cette latte (11A) portant à l'arrière des cames (12) de déverrouillage du pied arrière, chaque latte (11A) comportant, à l'avant, une boutonnière (13A) de longueur (A) correspondant à la longueur des crochets (6), au milieu une autre boutonnière longitudinale (13B) de longueur égale à A+ΔP (ΔP étant la différence entre le plus grand pas du siège et le plus petit pas en avant du siège considéré), et, à l'arrière, outre les cames de déverrouillage (12), une ouverture (13C) laissant passer le verrou (9) du siège.

**Patentansprüche**

1. Vorrichtung zur Abstandsveränderung der Sitze in Linienflugzeugen mit Längsschienen (3), die in ihren oberen horizontalen Schenkeln schwalbenschwanzförmige Längsrinnen (4) und in die beiden inneren, diese Rinne begrenzenden Lippen (3a) eingreifende Löcher (5) aufweisen, wobei der Abstand zwischen zwei benachbarten Löchern gleich einem Elementarschritt der Sitzabstandsveränderung ist, und mit einer auf jedem Fuß eines Sitzes angeordneten Vorrichtung zur Verankerung des Sitzes auf der Schiene in der gewünschten Position, wobei einer der Füße einen vertikal beweglichen Reigelbolzen (9) aufweist, der in ein Loch der Schiene eingreifen kann, dadurch gekennzeichnet, daß sie einen Motorsitz (1) und vor und/oder hinter dem Motorsitz angeordnete bewegliche Sitze (2) umfaßt, sowie einen Übertragungsmechanismus zwischen dem Motorsitz und den beweglichen Sitzen, wobei der Motorsitz einen durch einen Motor (32) bewegbaren Antriebsmechanismus (33, 31, 34) trägt, der mit länglichen, translatorisch beweglichen Verbindungselementen (24) gekuppelt ist, die sich auf jeder Längsschiene (3) befinden und die über eine vorgegebene Entfernung je nach der gewünschten Abstandsänderung dadurch vor oder zurück bewegbar sind, daß der Übertragungsmechanismus ein Paar metallischer Laschen (11, 11A) umfaßt, die in Höhe der Schienen die Sitze untereinander verbinden, wobei die dem Motorsitz am nächsten gelegenen Laschen (11) mit den länglichen Verbindungselementen (24) gekuppelt sind, und daß Mittel zur automatischen Steuerung der Entriegelung des Sitzes bei einer Bewegung der Laschen vorgesehen sind.

2. Vorrichtung nach Anspruch 1, dadurch gekennzeichnet, daß der Motorsitz deuerhaft mit einem Motor (32) verbunden ist, der mit dem Antriebsmechanismus (33, 31, 34) in Verbindung steht.

3. Vorrichtung nach Anspruch 1, dadurch gekennzeichnet, daß der vom Motorsitz getragene Antriebsmechanismus durch einen unabhängigen Motor betätigbar ist, der von Hand steuerbar und mechanisch mit dem Antriebsmechanismus verbunden ist.

4. Vorrichtung nach einem der Ansprüche 1 bis 3, dadurch gekennzeichnet, daß die länglichen Verbindungselemente (24) von zwei Zahnstangen gebildet werden, von denen jede einer Schiene zugeordnet ist, die direkt durch Druck oder Zug auf die metallischen Laschen (11) einwirken, die den Übertragungsmechanismus bilden, wobei diese Laschen in Höhe der Schienen die Vorderfüße eines jeden Sitzes mit den Hinterfüßen des davor befindlichen Sitzes verbinden und die Laschen (11) der dem Motorsitz am nächsten gelegenen Sitze direkt mit dem Antriebsgestänge verbunden sind.

5. Vorrichtung nach einem der Ansprüche 1 bis 4, dadurch gekennzeichnet, daß jede Übertragungslasche (11) einen umgekehrt U-förmigen Querschnitt aufweist, durch welchen sie auf dem oberen Schenkel der Schiene (3) geführt ist und daß auf ihrer Oberseite längs ihrer beiden seitlichen Ränder zwei zueinander parallele Steuerkurven (12) angeordnet sind, zwischen welchen der vertikal bewegliche Riegelbolzen (9) angeordnet ist, wobei diese Lasche in ihrem mittleren Bereich von einer knopflochartigen, länglichen Aussparung (13) durchbrochen ist, die eine Bewegung von zwei Elementarschritten ($2p$) nach vorn oder hinten dadurch gestattet, daß sie zwischen der Schiene (3) und der Verankerungsvorrichtung (6, 8) des Sitzfußes verschiebbar ist, und daß—welche vertikale Position auch immer der Riegelbolzen (9) einnimmt—das Ende der Bewegung nach vorn durch den Anschlag des hinteren Endes der Aussparung (13) an den Klammern (6) der Vrankerungsvorrichtung bestimmt wird, während das Ende der Bewegung nach hinten durch Anschläge (14) bestimmt wird, die seitlich auf der Lasche (11) vorgesehen sind und an einen Körper (15) der Verankerungsvorrichtung anschlagen.

6. Vorrichtung nach Anspruch 5, dadurch gekennzeichnet, daß der vertikal bewegliche Riegelbolzen (9) fest mit einer horizontalen Querachse (16) verbunden ist, die in vertikalen Ausnehmungen (17) im Körper (15) der Verankerungsvorrichtung verschiebbar ist und an ihrem Ende Rollen (18) trägt, auf die die seitlichen Steuerkurven (12) der Übertragungslasche (11) einwirken, wobei der Verriegelungsbolzen (9) dauernd durch eine Feder (19) nach unten gespannt ist.

7. Vorrichtung nach Anspruch 6, dadurch gekennzeichnet, daß der Verriegelungsbolzen (9) fest mit einem ihn nach oben verlängernden Schaft (9b) verbunden ist, in dem eine Einkerbung (9a) ausgebildet ist, und daß ein Sperrnocken (21) einen Zylinder (22) umfaßt, der eine horizontale Querachse besitzt, die gegenüber der Vertikalachse des Riegelbolzens (9) versetzt ist, sowie einen Vorsprung (23), der in Bezug auf diese Achse exzentrisch angeordnet ist und in die Einkerbung (9a) des Riegelbolzens (9) eingreift, wobei dieser Sperrnocken (21) an siener äußeren Strinfläche einen Schlitz (20) aufweist, der seine Drehung ermöglicht.

8. Vorrichtung nach Anspruch 6, dadurch gekennzeichnet, daß der Riegelbolzen (9) durch eine Feder (19) in einer oberen Position gehalten wird, die in eine Ausnehmung des Schaftes (9b) des Riegelbolzens (9) eingreift, wenn sich dieser in einer oberen Position befindet, wobei diese Feder (19) am Grundkörper (15) der Verankerungsvorrichtung befestigt ist.

9. Vorrichtung nach einem der Ansprüche 1 bis 8, dadurch gekennzeichnet, daß ein vor dem Motorsitz angeordneter, beweglicher Sitz auf zwei Laschen (11) positioniert ist, die eine Längsverbindung mit veriabler Länge zwischen dem vorderen Fuß (2A) des beweglichen Sitzes und dem hinteren Fuß des davor befindlichen Sitzes einerseits und dem hinteren Fuß (2) des beweglichen Sitzes und dem vorderen Fuß des folgenden Sitzes andererseits herstellen, daß jede Lasche (11) im vorderen Bereich eine Aussparung (13) mit konstanter Abmessung für alle Laschen aufweist, die den Riegelbolzen (9) und die Klammern (6) eines hinteren Fußes (2) einschließt, wobei Nocken (12) die Entriegelung des hinteren Fußes (2) steuern, und im hinteren Bereich eine weitere längliche Aussparung (13a), die die Klammern (6) des vorderen Fußes (2A) einschließt und deren Länge gleich $A+(\Delta P-2)$ ist, wobei A die Länge der Klammern (6) und $\Delta P$ den Unterschied zwischen dem größten und dem kleinsten Schritt des Sitzes nach vorn bezeichnet.

10. Vorrichtung nach einem der Ansprüche 1 bis 8, dadurch gekennzeichnet, daß für die beweglichen Sitze, welche hinter dem Motorsitz angeordnet sind, die Verbindung zwischen ihnen durch die Laschen (11A) sichergestellt ist, die sich vom hinteren Fuß eines Sitzes zum hinteren Fuß eines folgenden Sitzes erstrecken, wobei diese Lasche (11A) im hinteren Bereich Entriegelungsnocken (12) für den hinteren Fuß aufweist, und wobei jede Lasche (11A) im vorderen Bereich eine Durchbrechung (13A) aufweist, deren Länge (A) der länge der Klammern (6) entspricht, und in der Mitte eine andere längliche Durchbrechung (13B) mit der Länge gleich $A+\Delta P$ (wobei $\Delta P$ die Differenz ist zwischen dem größten und dem kleinsten nach vorn gerichteten Schritt des betreffenden Sitzes), sowie hinten außer den Entriegelungsnocken (12) eine Öffnung (13C) für den Durchtritt des Verriegelungsbolzens (9).

**Claims**

1. A device for varying the distance between the seats in commercial aircraft, or pitch, comprising longitudinal rails (3) provided, in their upper horizontal flanges, with dovetail shaped grooves (4) and holes (5) pierced in the two inner lips (3a) of the rail defining this groove, the distance between two adjacent holes being equal to that of an elementary pitch of displacement of the seat, and, on each foot of a seat, a device for securing the seat to the rail in the desired position, one of the feet comprising a vertically mobile bolt (9) engaging in a hole in the rail, characterized in that it comprises a driving seat (1), mobile seats (2) disposed in front of and/or behind the driving seat, and a transmission mechanism between the driving seat and the mobile seats, the driving seat bears a drive mechanism (33, 31, 34) moved by a motor (32), this drive mechanism being coupled to elongated connection members (24) mobile in translation, located on each rail (3) and able to be displaced forwards or backwards by a predetermined distance as a function of the desired change in pitch, the transmission mechanism comprises a set of metal slats (11, 11A) connecting, at rail level, the feet of the mobile seats together, the slats (11) nearest the driving seat being coupled to the elongated connection members (24), and means are associated with the feet of each mobile seat to automatically control the unlocking of the seat as soon as the slats (11) are displaced.

2. A device according to claim 1, wherein the driving seat permanently bears a motor (32) coupled to the drive mechanism (33, 31, 34).

3. A device according to claim 1, wherein the drive mechanism borne by the driving seat is actuated by an independent motor, manoeuvred by hand and mechanically connected to this drive mechanism.

4. A device according to any of claims 1 to 3 wherein the elongated connection members (24) are constituted by two racks, one on each rail, directly actuating, in compression or in traction, the metal slats (11) constituting the transmission mechanism, these slats connecting, at rail level, the front feet of each seat to the rear feet of the preceding seat and the slats (11) of the seats closest to the driving seat being connected to the driving rods.

5. A device according to any of claims 1 to 4, wherein each transmission slat (11) has a cross section in the form of an inverted U by which it slides on the upper flange of the rail (3) and it bears on its upper face, along its two longitudinal edges, two opposite parallel cams (12), between which the bolt (9) with vertical movement is located, this slat being pierced, in its median part, with a longitudinal slot (13) allowing it a forward or backward movement of two elementary pitches (21), by sliding between the rail (3) and the device (6, 8) for securing the foot of the seat, whatever the vertical position of the bolt (9), the forward end-of-stroke being determined by the abutting of the rear end of the slot (13) against the hooks (6) of the securing device, whilst the rearward end-of-stroke is determined by catches (14) provided laterally on the slat (11) and abutting against a body (15) of the securing device.

6. A device according to claim 5, wherein the bolt (9) with vertical movement is fast with a horizontal transverse pin (16) sliding in vertical slots (17) made in the body (15) of the securing device and bearing, at its ends, rollers (18) on which act the lateral cams (12) of the transmission slat (11), this bolt (9) being permanently urged downwardly by a spring (19).

7. A device according to claim 6, wherein the bolt (9) is fast with a stem (9b) extending it upwardly and in which is made a notch (9a), and a locking cam (21) comprises a cylinder (22) of horizontal and transverse axis offset with respect to the vertical axis of the bolt (9) and a catch (23) eccentric with respect to this axis and engaged in the notch (9a) of the stem of the bolt (9), this cam (21) presenting, in its outer face, a slot (20) enabling it to be rotated.

8. A device according to claim 6, wherein the bolt (9) is maintained in high position by a spring (19) engaging in a slot in the stem (9b) of the bolt (9) when this latter is in high position, this spring (19) being fixed to the body of the securing device.

9. A device according to any of claims 1 to 8, wherein a mobile seat located in front of the driving seat is placed on two slats (11) establishing a connection of variable length between, on the one hand, the front foot (2A) of the mobile seat and the rear foot of the preceding seat and, on the other hand, the rear foot (2) of this mobile seat and the front foot of the following seat, each slat (11) comprising, at the front, a slot (13) of constant dimensions for all the slats, enveloping the bolt (9) and the hooks (6) of a rear foot (2), cams (12) controlling the unlocking of the rear foot (2) and, at the rear, another longitudinal slot (13a) enveloping the hooks (6) of the front foot (2A) and of length equal to A+(ΔP−2), A being the length of the hooks (6) and Δp being the difference between the largest pitch of the seat and the smallest pitch in front of the seat in question.

10. A device according to claims 1 to 8, wherein, for the mobile seats located to the rear of the driving seat, the connection is ensured between them by slats (11A) extending from the rear foot of one seat to the rear foot of a following seat, this slat (11A) bearing at the rear cams (12) for unlocking the rear foot, each slat (11A) comprising, at the front, a slot (13A) of length A, corresponding to the length of the hooks (6) at the centre another longitudinal slot (13B) of length equal to A+ΔP, ΔP being the difference between the largest pitch of the seat and the smallest pitch in the front of the seat in question, and to the rear, in addition to the unlocking cams (12), an opening (13C) allowing the bolt (9) of the seat to pass.